Europäisches Patentamt

European Patent Office

Office européen des brevets

(11) Publication number: **0 178 723**
A2

# (12) EUROPEAN PATENT APPLICATION

(21) Application number: 85201611.2

(22) Date of filing: 03.10.85

(51) Int. Cl.⁴: **B 01 J 23/20**
B 01 J 29/06, C 10 G 11/05

(30) Priority: 11.10.84 JP 213193/84

(43) Date of publication of application:
23.04.86 Bulletin 86/17

(84) Designated Contracting States:
DE FR GB NL

(71) Applicant: CATALYSTS & CHEMICALS INDUSTRIES
CO., LTD.
No. 6-2, Ohtemachi 2-chome
Chiyoda-ku Tokyo(JP)

(72) Inventor: Sato, Goro
No. 2530, Tonda Wakamatsu-ku
Kitakyushu-shi Fukuoka-ken(JP)

(72) Inventor: Ogata, Masamitsu
No. 2-13, Koiro-machi Wakamatsu-ku
Kitakyushu-shi Fukuoka-ken(JP)

(72) Inventor: Ida, Takanori
No. 17-2, Nakai 2-chome Kokurakita-ku
Kitakyushu-shi Fukuoka-ken(JP)

(72) Inventor: Teshima, Katsuhide
No. 22-36-4, Matsunomoto
Onga-machi Onga-gun Fukuoka-ken(JP)

(74) Representative: van der Beek, George Frans et al,
Nederlandsch Octrooibureau Johan de Wittlaan 15 P.O.
Box 29720
NL-2502 LS 's-Gravenhage(NL)

(54) Catalyst composition for catalytic cracking of hydrocarbons.

(57) This invention related to a catalyst composition for catalytic cracking of hydrocarbons, which comprises porous matrix material containing crystalline aluminosilicate and niobium component, characterized in that said niobium component is present in an amount of 0.1 to 7.0 % by weight on the basis of Nb element in the final catalyst product.

EP 0 178 723 A2

CATALYST COMPOSITION FOR CATALYTIC CRACKING
OF HYDROCARBONS

BACKGROUND OF THE INVENTION

This invention relates to a catalyst composition used for catalytic cracking of hydrocarbons. Particularly, this invention relates to a catalyst composition having a high cracking activity, which provides catalytic cracking products comprising gasoline of a high octane number, rich in light olefins and light saturated hydrocarbons.

Gasoline produced by catalytic cracking of hydrocarbons is generally mixed with straight run naphtha, reformed gasoline and the like, and the resultant mixture is used as a motor gasoline. It is important that motor gasoline has a high octane number, that is, rich in high octane number materials such as olefins, aromatic hydrocarbons, isoparaffins and the like. Moreover, it is preferable that it is rich in light hydrocarbon components in view of cold starting, acceleration and other performances. When the olefin content of motor gasoline is increased, there are caused such problems as that the oxidation stability of gasoline is lowered and that gum is formed. On the other hand, the increase of the aromatic hydrocarbon content causes environmental problems since unburned hydrocarbons are increased in combustion waste gas. This is also true for catalytic cracking gasoline, and therefore it is required that catalytic cracking gasoline is rich in lighter isoparaffins, naphthene hydrocarbons and the like.

Generally known catalytic cracking catalysts comprise crystalline aluminosilicate dispersed in porous matrix material such as silica, silica-alumina, silica-magnesia, silica-zirconia and the like. As well known, the catalytic cracking reaction of hydrocarbons is explained by carbonium ion mechanism, and the reaction properties such as activity, selectivity and the like are varied depending on the solid acidity of zeolite and porous matrix material working as activity site. Particularly, the solid acidity of zeolite has a strong influence on the reaction performance. H-formed zeolite or rare-earth-formed zeolite is typically used as zeolite. The former produces a high octane number gasoline rich in olefin, while the latter produces a low octane number gasoline poor in olefin but rich in saturated hydrocarbons. This is probably because the latter has high hydrogen-transfer activity. Therefore, it is preferable to use H-formed zeolite for the purpose of producing a high octane number gasoline, but there is a disadvantage, as mentioned above, that the stability of the gasoline thus produced is poor because of the high content of olefin. Other effective method for obtaining a high octane number gasoline is to raise the temperature of cracking reaction. Generally, the octane number of 0.5 - 0.7 is elevated per 10°C increase in the reaction temperature. This is probably because, in proportion to the elevation of cracking temperature, the gasoline thus produced is lightened and the production of high octane number components such as aromatic hydrocarbons and olefins is prevailing in view of chemical equilibrium. However, this method is not always preferable since the production of gas and cokes is also increased and the yield of gasoline is accordingly lowered.

Important performances required for motor gasoline are cold starting, acceleration and other properties. Particularly, as the vapor pressure of gasoline is generally low when it is used in winter or in a cold district, this must be elevated. Consequently, gasoline rich in lighter fractions is desirable, but it is difficult for general catalytic cracking to produce the gasoline rich in lighter fractions without lowering the yield of gasoline. Therefore, $C_4$ fraction in the gas produced spontaneously with the cracking reaction is admixed with the gasoline (this is generally referred to as "butanation"). Another method is to mix alkylate gasoline therewith. This method is carried out in U. S. A. and other countries. Recently, the cut point of gasoline fraction is lowered, and this is to obtain a high octane number gasoline comprising low boiling point fractions and to raise the yield of intermediate fractions.

SUMMARY OF THE INVENTION

An object of the present invention is to provide a novel catalyst composition having a high cracking activity used in catalytic cracking of hydrocarbons, which provides cracking products rich in ligher fractions while controlling the formation of aromatic hydrocarbons without lowering the yield of gasoline and the octane number in the absence of the butanation operation.

That is, an object of the present invention is to provide a catalyst composition for catalytic cracking of hydrocarbons, which comprises porous matrix material containing crystalline aluminosilicate and niobium component, characterized in that said niobium component is present in an amount of 0.1 to 7.0 % by weight on the basis of Nb element in the final catalyst product.

DETAILED EXPLANATION OF THE INVENTION

In order to accomplish the above mentioned object, we have studied and discovered that a catalyst containing niobium gives excellent properties which could not be achieved heretofore. That is, we have discovered that the object of the present invention can be accomplished by providing a catalyst composition for catalytic cracking of hydrocarbons, which comprises porous matrix material containing crystalline aluminosilicate and niobium component, characterized in that said niobium component is present in an amount of 0.1 to 7.0 % by weight on the basis of Nb element in the final catalyst product.

According to the present invention, there is provided an excellent catalyst composition for catalytic cracking which produces gasoline rich in lighter fractions without lowering the yield of gasoline and without increasing the formation of gas and cokes. When using the catalyst composition of the present invention, the addition of $C_4$ fraction (butanation) or mixing with alkylate is reduced or omitted. Thus, the niobium-containing catalyst improves the cracking activity and the yield of gasoline, and the gasoline obtained is rich in saturated hydrocarbons and poor in aromatic hydrocarbons. In the analysis of the product fractions in view of their boiling points, the yield of a lighter fraction having a boiling point of not higher than 98°C is increased and that of a heavier fraction having a boiling point of not lower than 99°C is reduced. Particularly, the research octane number (RON) of a fraction having a boiling point of not higher than 64°C is elevated by 1.2 - 1.8 RON and that of a fraction having a boiling point of 65 - 98°C is elevated by 1.3 - 2.8 RON. On the other hand, the formation of aromatic hydrocarbons is remarkably reduced, and the octane number of a fraction having a boiling point of not lower than 99°C is lowered.

With regard to a high boiling point fraction having a boiling point of not lower than 137°C, the formation of aromatic hydrocarbons is selectively reduced, and this means the decrease of aromatic hydrocarbons in intermediate fractions (such as kerosene, gas oil and the like) produced by catalytic cracking. When the amount of aromatic hydrocarbons is reduced, aniline point is elevated and accordingly cetane number is also elevated. This is proved by the following cetane number calculation formula.

$$\text{Cetane Number} = 16.49 - 1.1332(AP/100) + 12.9676(AP/100)^2 - 0.2050(AP/100)^3 + 1.1723(AP/100)^4$$

AP: Aniline Point, °F

As mentioned above, it is clear that the cetane number of the kerosene and gas oil fractions produced by using the niobium-containing catalyst of the present invention is high.

The catalyst composition for catalytic cracking of hydrocarbons of the present invention comprises a porous matrix material containing a crystalline aluminosilicate and niobium component. The catalyst composition of the present invention is prepared by mixing a crystalline aluminosilicate with the precursor of a porous matrix material to prepare an aqueous slurry, spray-drying the slurry thus prepared to form micro spherical and introducing a predetermined amount of niobium component into the micro spherical. The niobium component may be introduced by previously adding a predetermined amount of the niobium component to said aqueous slurry and spray-drying the resultant slurry to form micro spherical.

A hydrosol or hydrogel which gives a porous matrix material such as silica, silica-alumina, silica-magnesia, silica-zirconia and the like can be used in the preparation of the catalyst composition of the present invention, and these materials may be used in a mixture with alumina, kaolin, bentonite or the like.

Examples of a crystalline aluminosilicate include $NH_4$-formed zeolite ion-exchanged with ammonium ion, H-formed zeolite prepared by calcining said zeolite, ultra-stable zeolite prepared by hydrothermal treatment and zeolite ion-exchanged with alkaline-earth metal ion or rare-earth metal ion.

The amount of niobium component introduced is preferably 0.1 - 7.0 % by weight on the basis of Nb element in the final catalyst. If the amount of niobium is less than 0.1 % by weight, the effect of the present invention is not achieved. On the other hand, if the amount of niobium is more than 7.0 % by weight, the formation of aromatic hydrocarbons is restricted too much and accordingly the yield of gasoline and its octane number are unfavourably lowered.

The present invention is more concretely explained by the following Examples, but should not be limited thereto.

Comparative Example (Preparation of Comparative Catalyst)

A water glass solution having an $SiO_2$ concentration of 12.73 % was prepared by diluting commercially available water glass No. 3. A sulfuric acid solution having a concentration of 25 % was prepared. A silica hydrosol was prepared by continuously mixing the water glass solution in an

amount of 20 l/min with the sulfuric acid solution in an amount of 5.6 l/min for 10 minutes. Kaolin and calcined alumina (FCA) prepared by coming aluminium hydroxide produced by Bayer process into contact with a hot air stream of 650°C for a short time respectively in such amounts as to provide 50 % by weight and 10 % by weight in the final catalyst composition were mixed with the above prepared silica hydrosol of such an amount as to provide 20 % by weight of silica in the final catalyst composition. To the resultant mixture, was further added an ammonium Y type zeolite (exchanging rate = 98 %) solution having a concentration of 30 % in such an amount as to give 20 % by weight of zeolite in the final catalyst composition. The mixture thus prepared was spray-dried, washed and dried to obtain Catalyst A.

Example 1

Four kinds of niobium chloride solutions having respectively different concentrations were prepared. Four catalyst compositions prepared in the same manner as in the preparation of the above comparative Catalyst A were suspended respectively in the above prepared niobium chloride solutions. The resultant suspensions were stirred for 30 minutes at room temperature, dehydrated, filtered, and further washed to obtain Catalysts B-1, B-2, B-3 and B-4. The respective catalyst thus obtained contained niobium in amounts of 0.7 % by weight, 1.75 % by weight, 6.4 % by weight and 8.4 % by weight on the basis of Nb element.

Example 2

Catalyst compositions prepared in the same manner as in the preparation of the above comparative Catalyst A were calcined at 600°C for 2 hours. The catalyst thus calcined had a pore volume of 0.24 ml/g. Three kinds of niobium chloride solutions having respectively different concentrations were prepared. 24 ml of the above prepared niobium chloride solution was absorbed by 100 g of the above prepared catalyst, and the resultant catalyst was dried. Thus, Catalysts C-1, C-2 and C-3 containing niobium in amounts respectively of 0.7 % by weight, 6.4 % by weight and 8.4 % by weight were obtained.

Catalyst Performance Test

The above prepared catalysts of the present invention and comparative catalyst were subjected to cracking activity test. Each catalyst was subjected to the test after being treated in 100 % water vapor stream at 750°C for 17 hours and calcined at 600°C for 1 hour. The feed oil used in the test was Clark Oil, and the reaction conditions were as follows:

Temperature = 482°C,

WHSV = 2.2/hour, and

Catalyst/Oil = 5.6

The test results are shown in the following Tables 1 and 2. The composition of the gasoline thus produced was analyzed by gas chromatography. The values of research octane number (RON) were calculated from the previously known octane number of each component. This calculation method is fully described in the Technical Report 1, No. 1 (1983) of Catalysts & Chemicals Industries Co., Ltd.

As can be seen from Tables 1 and 2, the niobium-containing catalyst of the present invention gives an improved cracking activity, and the yield of gasoline is consequently elevated. Moreover, the yield of the lighter fraction of the gasoline is also elevated. In the test using Catalysts B-4 and C-3 respectively containing niobium in amounts of higher than 7 % by weight, the yield of the lighter fraction is increased, but the yield of the total gasoline is lowered.

Table 1

Composition of Catalyst

| | |
|---|---|
| $SiO_2$ | 2 0 wt % |
| Calcined Alumina (F C A) | 1 0 wt % |
| Kaolin | 5 0 wt % |
| $NH_4$ Y type Zeolite ($NH_4$ exchange rate = 98%) | 2 0 wt % |

| Catalyst | A | B − 1 | B − 2 | B − 3 | B − 4 | C − 1 | C − 2 | C − 3 |
|---|---|---|---|---|---|---|---|---|
| Niobium Content $Nb$ wt % | 0 | 0.70 | 1.75 | 6.40 | 8.40 | 0.70 | 6.40 | 8.40 |
| Cracking Test Results | | | | | | | | |
| Conversion vol % | 75.9 | 80.2 | 79.4 | 79.0 | 77.6 | 77.9 | 78.0 | 77.2 |
| $H_2$ wt % | 0.26 | 0.26 | 0.26 | 0.29 | 0.25 | 0.26 | 0.28 | 0.30 |
| $C_1$ 〃 | 1.0 | 1.0 | 1.0 | 1.0 | 0.9 | 0.9 | 0.9 | 0.9 |
| $C_2$ 〃 | 1.2 | 1.2 | 1.1 | 1.1 | 1.2 | 1.1 | 1.2 | 1.0 |
| $C_3$ 〃 | 2.1 | 2.2 | 2.1 | 1.7 | 2.2 | 2.0 | 2.0 | 1.7 |
| $C_3^=$ 〃 | 5.2 | 5.7 | 5.7 | 5.8 | 5.8 | 5.1 | 5.5 | 5.5 |
| $C_4$ 〃 | 5.9 | 7.1 | 6.6 | 6.8 | 8.1 | 6.8 | 6.5 | 6.4 |
| $C_4^=$ 〃 | 2.1 | 2.8 | 3.0 | 2.9 | 3.4 | 2.6 | 2.9 | 3.1 |
| $C_5^+$ gasoline vol % | 68.5 | 69.6 | 69.6 | 68.8 | 64.5 | 68.9 | 68.6 | 67.9 |
| Cokes wt % | 4.2 | 4.8 | 4.8 | 5.0 | 4.7 | 4.6 | 4.6 | 4.7 |
| Research Octane Number (R O N) | 93.9 | 93.9 | 93.5 | 93.5 | 93.0 | 93.9 | 93.7 | 93.0 |

Table 2

| Catalyst | | A | B-1 | B-2 | B-3 | B-4 | C-1 | C-2 | C-3 |
|---|---|---|---|---|---|---|---|---|---|
| Niobium Content Nb wt % | | 0 | 0.70 | 1.75 | 6.40 | 8.4 | 0.70 | 6.40 | 8.40 |
| Components of Product | Type | | | | | | | | |
| 1 $i-C_4, C_4=$ | O | 2.14 | 3.74 | 2.20 | 2.93 | 2.09 | 2.77 | 2.72 | 2.14 |
| 2 $n-C_4$ | S | 1.14 | 2.32 | 1.5 | 2.05 | 1.52 | 1.79 | 1.81 | 1.65 |
| 3 $2-C_4=$ | O | 0.70 | 1.41 | 1.0 | 2.20 | 0.99 | 1.48 | 1.31 | 1.92 |
| 4 $i-C_5$ | S | 7.76 | 9.44 | 7.7 | 10.15 | 7.46 | 7.89 | 7.92 | 8.38 |
| 5 $i-C_5=$ | O | 0.72 | 1.46 | 1.2 | 1.45 | 1.27 | 1.36 | 1.27 | 1.53 |
| 6 $n-C_5$ | S | 1.30 | 1.97 | 1.6 | 2.15 | 1.70 | 1.81 | 1.83 | 2.05 |
| 7 $2-C_5=$ | O | 3.72 | 5.06 | 4.4 | 5.94 | 4.34 | 5.45 | 5.27 | 5.66 |
| 8 $i-C_6$ | S | 8.71 | 9.43 | 8.7 | 10.28 | 8.76 | 8.66 | 8.56 | 9.28 |
| 9 $C_6=$ | O | 0.97 | 1.21 | 1.1 | 1.53 | 1.21 | 1.23 | 1.43 | 1.65 |
| 10 $n-C_6$ | S | 0.85 | 0.92 | 0.8 | 1.04 | 0.86 | 0.85 | 0.86 | 0.92 |
| 11 3-methyl $C_5=$ | O | 3.82 | 4.16 | 3.8 | 4.97 | 4.01 | 4.29 | 4.24 | 4.77 |
| 12 $C_6H_6$ | A | 0.59 | 0.57 | 0.6 | 0.66 | 0.59 | 0.57 | 0.53 | 0.64 |
| 13 1-methyl cyclo $C_5=$ | O | 0.81 | 0.89 | 0.7 | 1.18 | 0.85 | 0.96 | 1.00 | 1.23 |
| 14 2-methyl $C_6$ | S | 5.92 | 5.59 | 5.2 | 6.78 | 5.49 | 5.21 | 5.24 | 6.03 |
| 15 3-methyl $C_6=$ | O | 2.83 | 2.85 | 2.7 | 3.69 | 2.94 | 3.49 | 3.02 | 3.99 |
| 16 $n-C_7$ | S | 0.66 | 0.63 | 0.6 | 0.79 | 0.63 | 0.61 | 0.64 | 0.78 |
| 17 $3-methyl-2-C_6=$ | O | 3.03 | 2.92 | 3.3 | 3.72 | 3.92 | 3.14 | 2.96 | 4.00 |
| 18 $C_6H_5-CH_3$ | A | 6.35 | 5.03 | 5.1 | 6.42 | 5.06 | 5.11 | 5.02 | 5.95 |
| 19 2,3- dimethyl $C_6$ | S | 0.31 | 0.71 | 1.0 | 0.41 | 0.93 | 0.35 | 0.32 | 1.06 |
| 20 2-methyl $C_7$ | S | 2.83 | 2.54 | 2.6 | 3.09 | 2.72 | 2.41 | 2.44 | 3.16 |
| 21 $1-C_8=$ | O | 1.31 | 1.26 | 1.8 | 1.66 | 1.83 | 1.66 | 1.42 | 2.13 |
| 22 $n-C_8$ | S | 0.38 | 0.34 | 0.4 | 0.40 | 0.41 | 0.34 | 0.34 | 0.45 |
| 23 2,5- dimethyl $C_7$ | S | 1.30 | 1.17 | 1.9 | 1.37 | 1.97 | 1.31 | 1.17 | 1.78 |
| 24 $C_6H_5-C_2H_5$ | A | 1.65 | 1.25 | 1.5 | 1.31 | 1.49 | 1.15 | 1.19 | 1.50 |
| 25 3,3- dimethyl $C_7$ | S | 0.19 | 0.24 | 0.3 | 0.27 | 0.35 | 0.27 | 0.26 | 0.36 |
| 26 $m,p-C_6H_4(CH_3)_2$ | A | 8.72 | 6.92 | 7.6 | 6.83 | 7.23 | 6.59 | 6.51 | 7.56 |
| 27 3- ethyl $C_8$ | S | 1.70 | 1.45 | 1.6 | 1.52 | 1.73 | 1.16 | 1.32 | 1.72 |
| 28 $o-C_6H_4(CH_3)_2$ | A | 2.94 | 2.30 | 2.6 | 2.11 | 2.48 | 2.31 | 2.18 | 2.40 |
| 29 2,2,4-trimethyl $C_7, n-C_9$ | S | 1.14 | 1.01 | 1.3 | 0.92 | 1.46 | 1.26 | 1.33 | 1.13 |
| 30 $C_6H_4(CH_3)(C_2H_5)$ | A | 14.85 | 12.63 | 14.1 | 8.47 | 13.27 | 13.57 | 14.54 | 9.62 |
| 31 $C_6H_3(CH_3)_3$ | A | 10.65 | 8.58 | 11.0 | 3.68 | 10.77 | 11.48 | 11.34 | 4.58 |
| Research Octane Number (RON) | | 93.9 | 93.9 | 93.5 | 93.5 | 93.0 | 93.9 | 93.7 | 93.0 |
| Type  S= saturated hydrocarbon (vol%) | | 39 | 42 | 40 | 45 | 41 | 40 | 39 | 43 |
| O=olefin (vol%) | | 22 | 27 | 24 | 31 | 25 | 26 | 27 | 31 |
| A= aromatic hydrocarbon (vol%) | | 39 | 31 | 36 | 24 | 34 | 34 | 34 | 26 |

| Research Octane Number (classification by boiling point) | | A | B-2 | C-2 |
|---|---|---|---|---|
| | − 64℃ | 94.3 | 95.5 | 96.1 |
| | 65 − 98℃ | 76.7 | 78.0 | 79.5 |
| | 99 - 136℃ | 87.6 | 84.8 | 85.9 |
| | 137 - 204℃ | 103.5 | 102.3 | 101.3 |

As seen from the above catalyst performance test, in the catalytic cracking of hydrocarbons in the presence of the catalyst of the present invention, the conversion is raised without lowering the yield of gasoline and the octane number, and there are provided cracking products rich in lighter fractions having a boiling point of not higher than 98°C while controlling the formation of heavier fractions having a boiling point of not lower than 99°C, particularly aromatic hydrocarbons.

By elevating the yield of lighter fractions, satisfactory cold starting and acceleration performances required for motor gasoline are given. By lowering the yield of aromatic hydrocarbons, environmental problems can be previously prevented since unburned hydrocarbons in combustion waste gas are decreased. Furthermore, the aniline point of the product is raised in proportion to the decrease of aromatic hydrocarbons, thus cetane number being elevated.

What we claim is:

1.   A catalyst composition for catalytic cracking of hydrocarbons, which comprises porous matrix material containing crystalline aluminosilicate and niobium component, characterized in that said niobium component is present in an amount of 0.1 to 7.0 % by weight on the basis of Nb element in the final catalyst product.